# EUROPEAN PATENT APPLICATION

(11) **EP 0 834 635 A1**
(43) Date of publication of application: **08.04.1998**
(21) Application number: 97117050.1
(22) Date of filing: 01.10.1997
(51) Int. Cl.: E05F 15/16, G05D 3/12

(54) **Apparatus for lifting up and down window glass for vehicle and method thereof**

(30) Priority: 02.10.1996 KR 9643755; 10.09.1997 KR 9746514
(71) Applicant: Samsung Motors Inc., Busankwangyeok-city (KR)
(72) Inventor: Yang, Jeong-Mo, Bundang-gu, Seongnam-.city, Kyungki-do (KR)
(74) Representative: Grünecker, Kinkeldey, Stockmair & Schwanhäusser Anwaltssozietät

(57) **Abstract**

An apparatus for accurately lifting up and down window glass for a vehicle up to a desired position by using a jog shuttle member (12). The apparatus includes a reversible motor (40) rotating clockwise and counterclockwise according to a polarity of a supply voltage. A window glass position detector (42) senses a revolution number of the reversible motor (40) to generate window glass position data. A jog shuttle member (12) mounted on an armrest detects a revolution angle of a rotatary switch (16) thereof to generate position control data corresponding to the revolution angle. A microprocessor (36) compares current position control data with previous position control data to generate a rotational direction control signal and a driving signal for the reversible motor (40), and completes generation of the rotational direction control signal and the driving signal when the window glass position data corresponds to the current position control data from the jog shuttle member. Then, a motor driver (38) provides the reversible motor with a driving voltage corresponding to the rotational direction control signal and the driving signal. Thus, the window glass may be automatically accurately lifted up and down up to a desired position according to the revolution angle of the rotary switch of the jog shuttle member.

## Description

### Background of the Invention

### 1. Field of the Invention

The present invention relates to an improvement of an apparatus for controlling window glass for a vehicle, and more particularly to an apparatus and method for accurately lifting up and down window glass up to a desired position by using a jog shuttle member.

### 2. Description of the Related Art

A well known method for lifting up and down window glass for a vehicle is to forcedly rotate a manual lever connected to a lifting gear of the window glass, and another known method is to actuate a reversible motor by operating an operation switch to automatically rotate the lifting gear of the window glass. The latter is commonly called a power window apparatus.

A general power window apparatus includes a reversible motor and an up/down switch or a seesaw type push button switch for rotating the reversible motor clockwise and counterclockwise to lift up and down the window glass. Here, the switch changes a polarity of a driving voltage supplied to the reversible motor to change a rotative direction of the reversible motor. However, in such a power window apparatus, in order to accurately lift up and down the window glass up to a desired position, a driver or a passenger should operate the switch little by little, continuously checking with the naked eye whether the window glass has reached the desired position.

An improved power window apparatus is well disclosed in US patent No. 4,931,714, entitled "Device for Lifting Up and Down Window Glass for Vehicle", issued by Yamamoto. Yamamoto proposes a power window apparatus in which a user can lift up and down the window glass to a desired position by using a slide rheostat, without paying attention to an opening/closing status of the window glass.

The conventional power window apparatus proposed by Yamamoto includes a complex potentiometer for comparing a voltage generated from the rheostat with a voltage corresponding to a position of the window glass. Thus, the conventional system may become complex in construction.

### Summary of the Invention

It is therefore an object of the present invention to provide an apparatus and method for accurately lifting up and down window glass for a vehicle up to a desired position by using a jog shuttle member.

It is another object of the present invention to provide a simple and compact apparatus for lifting up and down window glass for a vehicle.

According to an aspect of the present invention, an apparatus for lifting up and down window glass for a vehicle includes a reversible motor rotating clockwise and counterclockwise according to a polarity of a supply voltage; a window glass position detector for sensing a revolution number of the reversible motor to generate window glass position data; a jog shuttle member mounted on a predetermined interior part of the vehicle, for detecting a revolution angle of a rotary switch thereof to generate position control data corresponding to the revolution angle; a microprocessor for comparing current position control data with previous position control data to generate a rotational direction control signal and a driving signal for the reversible motor, and for completing generation of the rotational direction control signal and the driving signal when the window glass position data corresponds to the current position control data from the jog shuttle member; and a motor driver for providing the reversible motor with a driving voltage corresponding to the rotational direction control signal and the driving signal; whereby the window glass is lifted up and down up to a desired position according to the revolution angle of the rotary switch of the jog shuttle member.

### Brief Description of the Drawings

The above and other objects, features and advantages of the present invention will become more apparent in the light of the following detailed description of an exemplary embodiment thereof taken with the attached drawings in which:
Fig. 1a is a perspective view a jog shuttle member according to an embodiment of the present invention;
Fig. 1b is a bottom view of a rotary switch according to an embodiment of the present invention;
Fig. 1c is a top view of an electrode plate according to an embodiment of the present invention;
Fig. 1d is a cross-sectional view of the jog shuttle member of Fig. 1a;
Fig. 1e is an enlarged diagram for explaining a status that a revolution angle detection electrode is electrically coupled to a revolution angle electrode according to an embodiment of the present invention;
Fig. 2 is a schematic block diagram of an apparatus for lifting up and down window glass according to a preferred embodiment of the present invention; and
Fig. 3 is a flowchart for lifting up and down window glass according to an embodiment of the present invention.

### Detailed Description of the Preferred Embodiment

A preferred embodiment of the present invention will be described in detail hereinbelow with reference to the attached drawings, in which the like reference numerals used throughout the specification represent the like elements. Further, it should be clearly understood that many specifics such as the detailed circuit elements are shown only by way of an example to bring a better understanding of the present invention and the present invention may be embodied without the specifics. Moreover, it should be noted that detailed descriptions on the related prior art may be intentionally omitted if it is believed to be unnecessary in describing the concepts of the present invention.

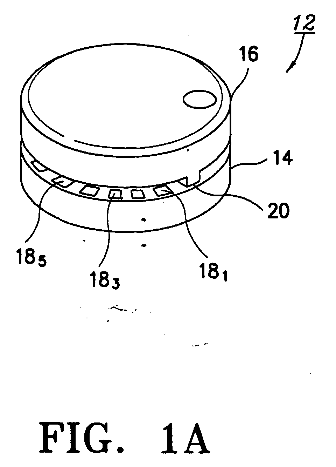

Referring to Fig. 1a, a jog shuttle member 12 includes a circular electrode plate 14 firmly fixed on a particular interior part (e.g., on an armrest) of the vehicle, and a rotary switch 16 rotatably mounted on the electrode plate 14. The electrode plate 14 has a number of revolution angle electrodes 18i (where i is a positive number) formed on the top surface thereof. Further, the rotary switch 16 has a revolution angle detection electrode 20 protrudently formed on the bottom surface thereof, to which a supply voltage is provided from a battery when an ignition switch (not shown) of the vehicle is turned on.

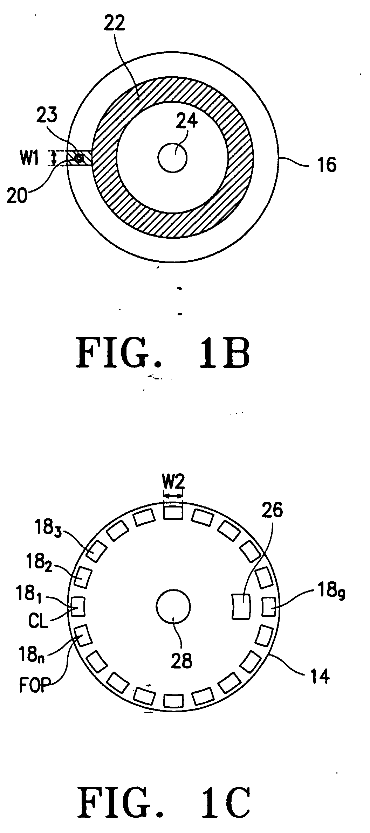

Fig. 1b illustrates a bottom view of the rotary switch 16. As illustrated, the circular rotary switch 16 includes the revolution angle detection electrode 20 protruding from an outer circumference, and a disc electrode 22 formed on the bottom surface along an intermediate circumference thereof. The revolution angle detection electrode 20 is electrically connected to the disc electrode 22. The revolution angle detection electrode 20 has a width W1 and is constantly provided with a supply voltage Vcc of the battery (not shown) through a battery electrode 26 of the electrode plate 14. Further, the rotary switch 16 has the spindle 24 formed on the center thereof.

Referring to Fig. 1c, the circular electrode plate 14 has the battery electrode 26 formed on the top surface so as to contact the disc electrode 22 of the rotary switch 16, and a pluraliry of the revolution angle electrodes 18i disposed at regular intervals along the outer circumference. A width W2 of the respective revolution angle electrodes 18i is preferably identical to or wider than the width W1 of the revolution angle detection electrode 20. Further, the electrode plate 14 has a through-hole 28 formed at the center, into which the spindle 24 of the rotary switch 16 is inserted. The electrode plate 14 is firmly mounted on a particular position of the vehicle, such as the armrest.

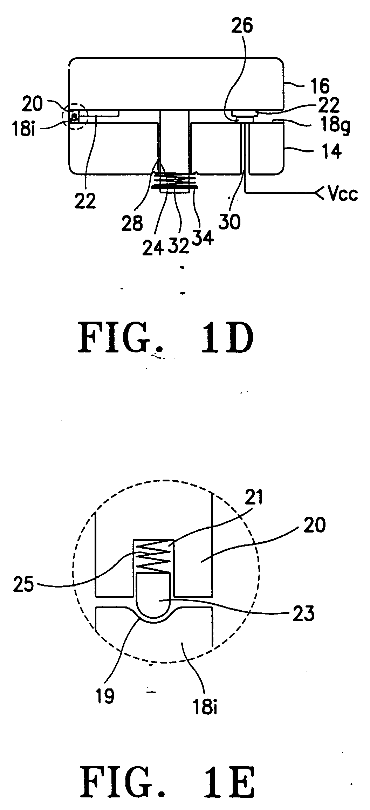

Referring to Fig. 1d, the rotary switch 16 is combined with the electrode plate 14 to assemble the jog shuttle member 12. As illustrated, a coil spring 32 is mounted on the bottom surface of the electrode plate 14, and an E-ring 34 is firmly fixed into a groove formed on a lower end portion of the spindle 24 to engage the rotary switch 16 with the electrode plate 14. Moreover, the electrode plate 14 has a through-hole 30, through which an electric wire is inserted to connect the supply voltage Vcc to the battery electrode 26.

Fig. 1e illustrates an enlarged diagram for explaining a status that the revolution angle detection electrode 20 is electrically coupled to one of the revolution angle electrodes 18i according to an embodiment of the present invention. As illustrated, a concave click stop pointer 19 is formed on the top surface of the respective revolution angle electrodes 18i. The revolution angle detection electrode 20 has a hole 21 formed at the center thereof, and a coil spring 25 inserted into the hole 21. Further, a ball electrode 23 is mounted on the coil spring 25 within the hole 21 so as to allow the revolution angle detection electrode 20 to accurately stop at an associated one of the revolution angle electrodes 18i, thereby securing an accurate electric connection between the revolution angle detection electrode 20 and the revolution angle electrodes 18i.

In operation, if the driver or passenger rotates the rotary switch 16, the revolution angle detection electrode 20 will electrically contact any one of the revolution angle electrodes 18i. Then, the revolution angle electrode 18j (where j = one of the positive numbers) connected to the revolution angle detection electrode 20 will have the logic "high" level, and the other revolution angle electrodes 18k (where k≠j) will have the logic "low" level.

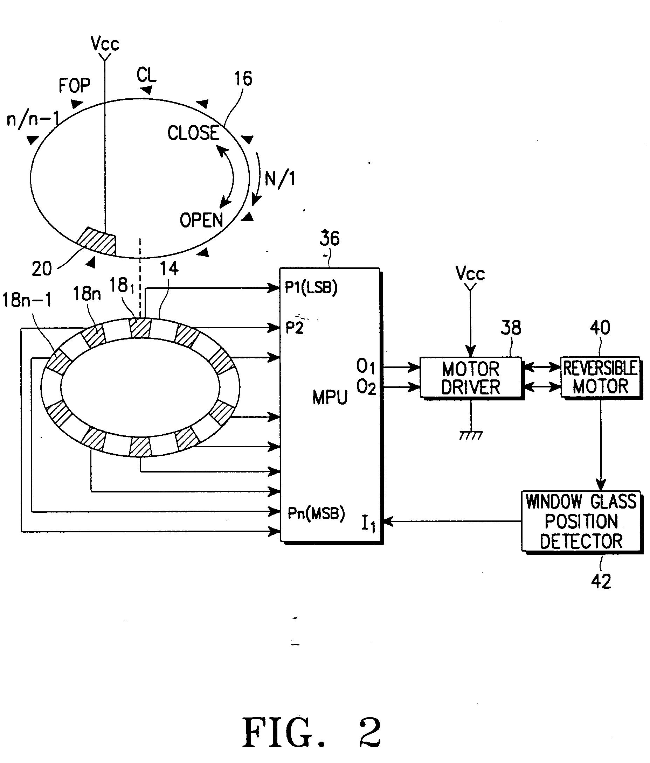

Now, referring to Fig. 2, an apparatus for lifting up and down the window glass for a vehicle according to the present invention includes the jog shuttle member 12 described heretofore, a microprocessor (MPU) 36, a motor driver 38, a reversible motor 40, and a window glass position detector 42. The microprocessor 36 has a number of input ports Pn-P1 respectively connected to the revolution angle electrodes 18ₙ-18₁ of the electrode plate 14. Further, the microprocessor 36 has output ports O1 and O2 respectively connected to input ends of the motor driver 38. The outputs of the motor driver 38 are transferred to the reversible motor 40. The window glass position detector 42 is interposed between the reversible motor 40 and an input port 11 of the microprocessor 36, and detects a revolution number (RPM) of the reversible motor 30 and provides the microprocessor 36 with the detected revolution number. It should be noted that the window glass position detector 42 initializes previous position control data stored in a memory (RAM) of the microprocessor 36 in response to a signal output from a door-closed status sensor (not shown) for sensing a completely closed status of the window glass. A spindle of the reversible motor 40 is connected to a lifting gear (not shown) for lifting up and down the window glass. Further, an operation plate is placed at the surrounding of the rotary switch 16. As illustrated in the drawing, the operation plate has a number of marks such as "OPEN", "CLOSE", "CL" (abbreviation for "Close"), "FOP" (abbreviation for "Full Open"), and arrows ( 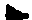 ).

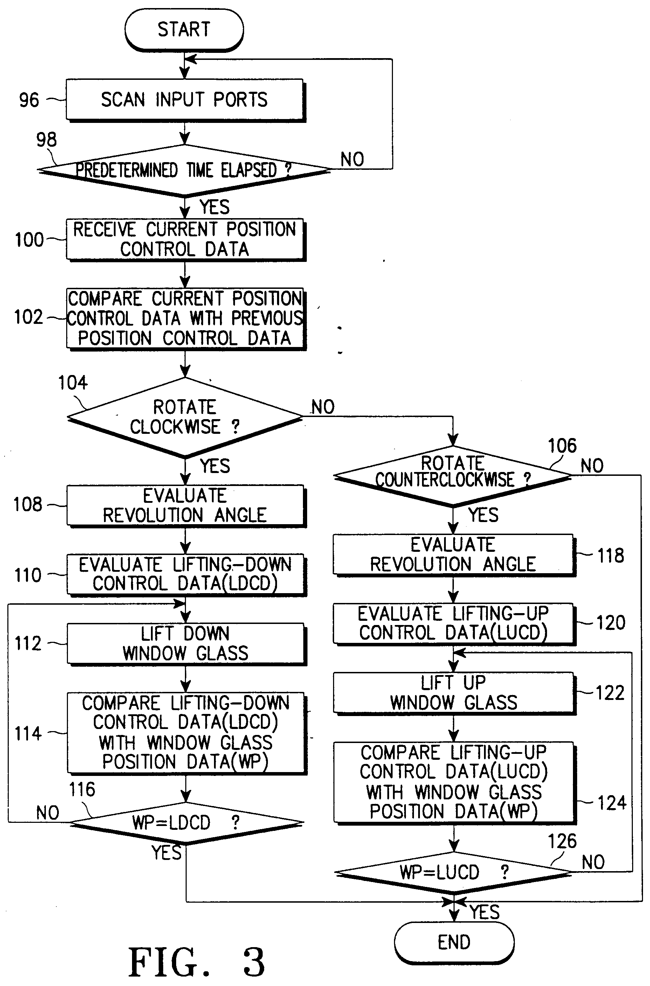

Fig. 3 illustrates a flowchart for lifting up and down the window glass according to the present invention. This procedure is programmed into an internal memory (ROM) of the microprocessor 36.

Now, referring to Figs. 1a to 3, operation of the window glass control apparatus according to the present invention will be described in detail hereinbelow. First, it is assumed that the revolution angle detection electrode 20 is initially positioned at the revolution angle electrode 18₁, so that the window glass is completely closed. In such a condition, if the driver or passenger rotates the rotary switch 16 of the jog shuttle member 12 in a particular direction, the revolution angle detection electrode 20 will electrically contact any one of the revolution angle electrodes 18i.

For example, if the revolution angle detection electrode 20 contacts the revolution angle electrode 18₃ or the revolution angle electrode 18ₙ₋₁, position control data applied to the input ports Pn-P1 of the microprocessor 36 will have the values as shown in the following Table 1.

**Table 1**

| 18ᵢ Connected to Electrode 20 | Pn | Pn-1 | .... | P5 | P4 | P3 | P2 | P1 |
|---|---|---|---|---|---|---|---|---|
| 18₃ | 0 | 0 | .... | 0 | 0 | 1 | 0 | 0 |
| 18ₙ₋₁ | 0 | 1 | .... | 0 | 0 | 0 | 0 | 0 |

Referring to Fig. 3, the microprocessor 36 periodically scans the input ports Pn-P1 at a step 96, and checks at a step 98 whether or not a predetermined time has elapsed. Here, the predetermined time refers to a particular time (e.g., about 1 or 2 seconds) taken to perform one turn of the rotary switch 16 by the driver or passenger. If the predetermined time has elapsed, the microprocessor 36 receives the position control data at the input ports Pn-P1, at a step 100. It should be noted that the microprocessor 36 receives the position control data after an elapse of the predetermined time in order to skip (or disregard) the unnecessary position control data generated while the rotary switch 16 rotates from the previous position to the current position.

Then, at a step 102, the microprocessor 36 compares the received current position control data with the previous position control data which has been stored in the internal memory (RAM). Here, the term "previous position control data" means data corresponding to a previous position at which the revolution angle detection electrode 20 of the rotary switch 16 was placed before the driver has rotated the rotary switch 16. If the previous position control data has a value higher than that of the current position control data, it is considered that the rotary switch 16 has rotated counterclockwise (i.e., a direction for lifting up the window glass). On the contrary, however, if the previous position control data has a value lower than that of the current position control data, it is meant that the rotary switch 16 has rotated clockwise (i.e., a direction for lifting down the window glass). Such a relationship is well described in the following Table 2.

**Table 2**

| Previous Pos. Cntl. Data (Pn-P1) | Current Pos. Cntl. Data (Pn-P1) | Rotational Direction |
|---|---|---|
| 00000 ... 00100 | 00000 ... 00010 | Counterclockwise |
| 00000 ... 00100 | 00000 ... 00100 | Non-Rotation |
| 00000 ... 00100 | 00000 ... 01000 | Clockwise |

In the light of the foregoing, the microprocessor 36 checks at a step 104 whether the rotary switch 16 has rotated clockwise. If the rotary switch 16 has rotated clockwise, the microprocessor 36 evaluates a revolution angle of the rotary switch 16 at a step 108. The revolution angle may be readily evaluated by simply comparing the previous position control data with the current position control data. For example, in case the electrode plate 14 has 36 revolution angle electrodes 18i formed thereon, an angle difference between two neighboring revolution angle electrodes 18i becomes 10°. Thus, for example, in case the previous position control data has the P3 = 1 and the current position control data has P6 = 1, it can be clearly understood from the variation of the position control data that the rotary switch 16 has rotated clockwise by 30°.

Then, at a step 110, the microprocessor 36 stores lifting-down control data LDCD corresponding to the evaluated revolution angle into an internal buffer prepared therein. At a step 112, the microprocessor 36 outputs a clockwise rotation control signal and a driving signal for the reversible motor 40 at the output ports O1 and O2 respectively, based on the lifting-down control data LDCD. The motor driver 38 rotates the reversible motor 40 clockwise at the constant revolution speed (RPM), in response to the clockwise rotation control signal and the driving signal. At the moment, the window glass position detector 42 detects the revolution number of the reversible motor 40 and evaluates a current position of the window glass based on the revolution number, to generate window glass position data WP.

At a step 114, the microprocessor 36 compares the window glass position data WP with the lifting-down control data LDCD. As result, if the window glass position data WP does not have the same value as that of the lifting-down control data LDCD, it is meant that the window glass still has not reached the desired position corresponding to the lifting-down control data LDCD. Thus, the procedure returns to the step 112 to repeatedly lift down the window glass until the window glass position data WP becomes identical to the lifting-down control data LDCD.

On the contrary, however, if the rotary switch 16 has not rotated clockwise at the step 104, the microprocessor 36 evaluates a revolution angle of the rotary switch 16 at a step 118. Then, at a step 120, the microprocessor 36 stores lifting-up control data LUCD corresponding to the revolution angle into the internal buffer. At a step 122, the microprocessor 36 outputs a counterclockwise rotation control signal and the driving signal for the reversible motor 40 at the output ports O1 and O2 respectively, based on the lifting-up control data LUCD. The motor driver 38 rotates the reversible motor 40 counterclockwise at the constant revolution speed (RPM), in response to the counterclockwise rotation control signal and the driving signal. At the moment, the window glass position detector 42 detects the revolution number of the reversible motor 40 and evaluates the current position of the window glass based on the revolution number, to generate the window glass position data WP.

At a step 124, the microprocessor 36 compares the window glass position data WP with the lifting-up control data LUCD. As a result, if the window glass position data WP does not have the same value as that of the lifting-up control data LUCD, it is meant that the window glass still has not reached the desired position corresponding to the lifting-up control data LUCD. Thus, the procedure returns to the step 122 to repeatedly lift up the window glass until the window glass position data WP becomes identical to the lifting-up control data LUCD.

Further, turning back to the step 106, if the rotary switch 16 has not rotated counterclockwise at the step 104, it is meant that the rotary switch 16 has not rotated. Thus, the microprocessor 30 will simply complete the procedure.

As described in the foregoing descriptions, the window glass control apparatus of the invention may automatically accurately lift up and down the window glass up to the desired position corresponding to the revolution direction and angle of the rotary switch 16 of the jog shuttle member 12, thereby offering convenience to the driver.

Although the window glass position detector 42 has been described hereinabove, it can be clearly understood that the window glass position detector 42 may be replaced with an RPM sensor or a hall sensor which detects the revolution of the reversible motor 40 to generate a revolution sensing pulse. In such a case, the microprocessor 36 counts the revolution sensing pulse to evaluate the window glass position based on the count value of the revolution sensing pulse and a gear ratio of the lifting gears.

Although various preferred embodiments of the present invention have been described in detail hereinabove, it should be clearly understood that many variations and/or modifications of the basic inventive concepts herein taught which may appear to those skilled in the art will still fall within the spirit and scope of the present invention as defined in the appended claims.

## Claims

1. An apparatus for lifting up and down window glass for a vehicle including a reversible motor rotating clockwise and counterclockwise according to a polarity of a supply voltage, comprising:
a window glass position detector for sensing a revolution number of said reversible motor to generate window glass position data;
a jog shuttle member mounted on a predetermined interior part of the vehicle, for detecting a revolution angle of a rotary switch thereof to generate position control data corresponding to said revolution angle;
a microprocessor for comparing current position control data with previous position control data to generate a rotational direction control signal and a driving signal for said reversible motor, and for completing generation of said rotational direction control signal and said driving signal when said window glass position data corresponds to said current position control data from said jog shuttle member; and
a motor driver for providing said reversible motor with a driving voltage corresponding to said rotational direction control signal and said driving signal;
whereby said window glass is lifted up and down up to a desired position according to the revolution angle of the rotary switch of said jog shuttle member.

2. An apparatus for lifting up and down window glass according to claim 1, wherein said jog shuttle member comprises:
said rotary switch having a revolution angle detection electrode formed on a bottom surface thereof; and
an electrode plate having a plurality of revolution angle electrodes formed on a top surface thereof at regular intervals so as to face said revolution angle detection electrode of the rotary switch, whereby said revolution angle detection electrode electrically contacts at least one of said revolution angle electrodes as the rotary switch rotates;
said rotary switch being rotatably mounted on a center of said electrode plate.

3. An apparatus for lifting up and down window glass according to claim 2, wherein said electrode plate is circular and includes a battery electrode which is provided with a supply voltage from the battery as an ignition switch of the vehicle is turned on.

4. An apparatus for lifting up and down window glass according to claim 3, wherein said rotary switch comprises:
said revolution angle detection electrode with a predetermined width, extending from an outer circumference to an inner circumference of said rotary switch; and
a disc electrode electrically connected to said revolution angle detection electrode, said disc electrode being formed at an intermediate circumference of said rotary switch.

5. An apparatus for lifting up and down window glass according to claim 4, wherein a width of said respective revolution angle electrodes is equal to or wider than said predetermined width of the revolution angle detection electrode.

6. An apparatus for lifting up and down window glass according to claim 5, wherein said window glass position detector comprises a hall sensor for detecting the revolution number of the reversible motor to generate a revolution sensing pulse.

7. An apparatus for lifting up and down window glass according to claim 6, wherein said microprocessor counts said revolution sensing pulse from the hall sensor to generate said the window glass position data.

8. A method for lifting up and down window glass for a vehicle including a reversible motor rotating clockwise and counterclockwise according to a polarity of a supply voltage, a window glass position detector for detecting a revolution number of said reversible motor to generate a window glass position data, and a jog shuttle member for detecting a revolution angle of a rotary switch thereof to generate position control data based on said revolution angle, comprising the steps of:
periodically scanning the position control data from the jog shuttle member;
receiving the current position control data after an elapse of a predetermined time to disregard unnecessary position control data generated during a rotation of the rotary switch;
comparing said current position control data with previous position control data to evaluate therefrom a revolution direction and angle of said rotary switch; and
rotating said reversible motor in the evaluated direction until the window glass position data is coincident with the current position control data, so as to lift up or down the window glass up to a desired position.

9. A method for lifting up and down window glass according to claim 8, wherein said comparison step comprises the steps of:
checking a quantity difference between the current position control data from the rotary switch and the previous position control data stored in a memory, to evaluate the revolution direction of the rotary switch; and
checking whether said current position control data has a value higher than that of said previous position control data to evaluate the revolution angle of the rotary switch.
